# EUROPÄISCHE PATENTSCHRIFT

(11) **EP 0 847 351 B1**
(45) Veröffentlichungstag und Bekanntmachung des Hinweises auf die Patenterteilung: **12.05.1999**
(21) Anmeldenummer: 96928456.1
(22) Anmeldetag: 13.08.1996
(51) Int. Cl.: B60T 8/34, F16K 47/00

(54) **HYDRAULISCH BETÄTIGTES UMSCHALTVENTIL**
HYDRAULIC CHANGE-OVER VALVE
SOUPAPE D'INVERSION A COMMANDE HYDRAULIQUE

(30) Priorität: 15.09.1995 DE 19534219
(43) Veröffentlichungstag der Anmeldung: 17.06.1998
(73) Patentinhaber: Continental Teves AG & Co. oHG, 60488 Frankfurt (DE)
(72) Erfinder: VOGEL, Günther, D-63303 Dreieich (DE)
(86) Internationale Anmeldenummer: EP9603572
(87) Internationale Veröffentlichungsnummer: WO9710132

(56) Entgegenhaltungen:
- EP-A- 0 606 840
- WO-A-90/11212
- DE-A- 4 236 045
- DE-A- 4 336 464

## Beschreibung

Die vorliegende Erfindung geht aus von einem hydraulisch betätigten Umschaltventil gemäß dem Oberbegriff des Anspruchs 1. Ein derartiges Umschaltventil ist beispielsweise aus der DE 42 36 045 A1 bekannt. Es ist vorgesehen für hydraulische Bremsanlagen mit Blockierschutzregelung, die im Blockierschutzbetrieb nach dem Rückförderprinzip arbeiten und hierzu mit einer Rückförderpumpe ausgestattet sind. Damit zu einer Antriebsschlupfregelung Druckmittel ohne pedalbetätigte Bremsung in die Radbremsen gelangen kann, ist die Rückförderpumpe selbstansaugend ausgelegt und besitzt eine Saugleitung zur Bremsleitung hin, wobei in der Bremsleitung zwischen Anschluß der Saugleitung und Anschluß der Druckleitung der Rückförderpumpe ein Trennventil eingefügt ist. Damit bei einer pedalbetätigten Bremsung das Druckmittel in die Radbremsen und nicht einfach zur Saugseite der Rückförderpumpe gelangt, ist in diese Saugleitung ein hydraulisch betätigtes Umschaltventil eingefügt, welches über den Hauptzylinderdruck gesteuert wird. Der Hauptzylinderdruck gelangt in die Einlaßkammer des Ventils und pflanzt sich durch den Ventilsitz hindurch in die Auslaßkammer fort. An die Auslaßkammer ist die Saugseite der Rückförderpumpe angeschlossen. In der Auslaßkammer wirkt der Hauptzylinderdruck auf die erste Membran ein, so daß diese sich in Richtung auf die Atmosphäre zu bewegt. Damit kann sich das Schließglied, welches sich mit seinem Stößel an dieser Membran abstützt, an den Ventilsitz anlegen und das Umschaltventil schließen. Von nun an wirkt der Hauptzylinderdruck nur noch in der Einlaßkammer. Die Auslaßkammer bleibt lediglich an die Saugseite der Rückförderpumpe angeschlossen.

Ohne Pedalbetätigung bleibt das Umschaltventil geöffnet, da auf die Membran von der Auslaßkammer her kein Druck einwirkt. Bei einer reinen pedalbetätigten Normalbremsung oder bei einer Antriebsschlupfregelung, wenn das Bremspedal nicht betätigt wird, arbeitet das hydraulisch betätigte Umschaltventil zuverlässig und leise. Wird jedoch während einer Antriebsschlupfregelung das Bremspedal betätigt, beispielsweise weil der Fahrer erkannt hat, daß die von ihm gewünschte Beschleunigung nicht durchzusetzen ist, oder wird das Bremspedal nach einer Blockierschutzregelung bei noch nachlaufender Rückförderpumpe gelöst, so beginnt das Ventil häufig zu flattern und erzeugt entsprechend laute Geräusche. Das liegt daran, daß bei einer pedalbetätigten Bremsung das Trennventil in der Bremsleitung geöffnet wird bzw. ist, so daß die Druckpulse der Rückförderpumpe bis in die Einlaßkammer des Umschaltventils gelangen, solange der Hauptzylinderduck niedriger ist als der Schließdruck zur Überwindung der den atmosphärenseitig angeordneten Kolben beaufschlagenden Druckfeder. Die Druckpulse der Rückförderpumpe wirken dann schließend auf das Umschaltventil ein, während in der Auslaßkammer die Ansaugphasen der Rückförderpumpe öffnend wirken. Das Ventil kann sich also aufschaukeln.

Die Aufgabe der vorliegenden Erfindung besteht darin, ein Ventil der eingangs genannten Art zu schaffen, welches in allen Phasen der Bremsbetätigung leise arbeitet.

Diese Aufgabe wird durch die Merkmale des Oberbegriffes in Verbindung mit den kennzeichnenden Merkmalen des Anspruchs 1 gelöst. Durch die Anordnung einer zweiten Membran in der Einlaßkammer, welche lediglich ein abgeschlossenes Luftkissen begrenzt, erhält die Einlaßkammer eine elastische Dämpfung. In die Einlaßkammer eintretende Druckpulse der Rückförderpumpe werden durch dieses Luftkissen wirkungsvoll gedämpft.

Je größer das eingeschlossene Luftvolumen ist, desto größer ist auch die dämpfende Wirkung. Daher empfiehlt es sich, die zweite Membran in die Einlaßkammer hinein zu wölben, so daß das eingeschlossene Volumen größer wird. Die entspannte gewölbte Form der Membran bewirkt in diesem Fall auch, daß, wenn das Material der Membran durch das verwendete Druckmittel aufquillt, die Membran nicht zum Luftkissen eingedrückt wird, sondern im Gegenteil in die Einlaßkammer hineinquillt.

Es empfiehlt sich, in der Mitte der Membran eine Verdickung zum eingeschlossenen Luftvolumen hin vorzusehen, damit die Anlagefläche der Membran an der rückwärtigen Wand der luftgefüllten Kammer bei Druckaufbau in der Einlaßkammer möglichst klein bleibt und ein Ankleben somit unterbleibt.

Damit sich trotz der größeren Anzahl der verwendeten Einzelteile die Fertigungszeit eines einzelnen Ventils nicht verlängert, empfiehlt sich eine parallele Vormontage des Luftkissens. Das heißt, daß die mit Luft gefüllte Kammer von der zweiten Membran und einem Metalltopf gebildet wird, wobei auf den Rand der Membran eine metallische Ringscheibe gelegt wird, welche vom Rand des Metalltopfes eingefaßt wird. Dann muß der Einbau des Metalltopfes in die Einlaßkammer des Umschaltventils nicht mehr abgedichtet erfolgen, da der Metalltopf selbst die Rückwand der luftgefüllten Kammer bildet.

Der Einbau des Metalltopfes ist somit auf einfache Weise möglich, indem er in vorteilhafter Weise mit kleinen Auswölbungen versehen wird, die ihn einfach in der Einlaßkammer festgeklemmt halten.

Eine nähere Erläuterung des Erfindungsgedankens erfolgt nun anhand der Beschreibung einer Zeichnung in zwei Figuren. Es zeigt
- Fig. 1: ein erfindungsgemäßes Umschaltventil,
- Fig. 2: eine Draufsicht auf ein vormontiertes Luftkissen vor seinem Einbau in ein erfindungsgemäßes Umschaltventil.

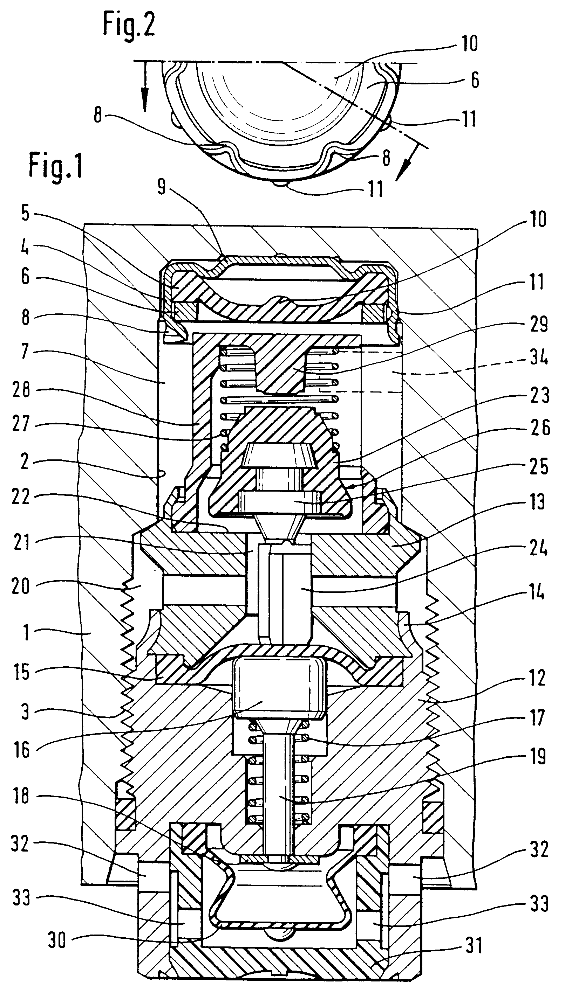

Das Umschaltventil nach Fig. 1 weist ein Gehäuse 1 auf, in welches eine gestufte Bohrung 2 geführt ist, welche an ihrem Ausgang mit einem Gewinde 3 versehen ist. In die Bohrung 2 sind zwei vormontierte Einheiten eingefügt. Eine vormontierte Einheit wird von einem Metalltopf 4, einer Membran 5 und einer metallischen Ringscheibe 6 gebildet, welche zusammen eine abgeschlossene, luftgefüllte Kammer bilden. Diese luftgefüllte Kammer stellt ein Luftkissen dar, welche am Ende der Bohrung 2 im Einlaßraum 7 des Umschaltventils eingefügt ist. Die Membran 5 ist mit ihrem verdickten Umfang in den Metalltopf 4 mittels der Ringscheibe 6 eingeklemmt, wobei anschließend der Metalltopf 5 mit mehreren Verstemmungen 8 an seinem Umfang entlang versehen wurde, so daß die Ringscheibe 6 vom Rand des Metalltopfes 4 festgehalten wird. Die Membran 5 wirkt mit ihrem verdickten Umfang dabei dichtend, so daß das zwischen ihr und dem Boden 9 des Metalltopfes eingeschlossene Luftvolumen abgedichtet ist. Die Membran 5 hebt sich mit ihrer Mitte durch eine Wölbung vom Boden 9 des Metalltopfes 4 ab. Zentral besitzt sie eine Verdickung 10, welche zum Boden 9 des Metalltopfes 4 hin gerichtet ist. Der Metalltopf 4 selbst weist an seiner Wand mehrere Auswölbungen 11, sogenannte Warzen, auf. Diese dienen dazu, ihn in seiner dargestellten Einbaulage am Ende der Bohrung 2 einzuklemmen. Gegenüber den Auswölbungen 11 am Umfang versetzt sind die Verstemmungen 8 angebracht, wie aus Fig. 2 ersichtlich ist.

Die zweite vormontierte Einheit des hydraulisch betätigten Umschaltventils entspricht im wesentlichen der Fig. 4 des genannten Standes der Technik, nämlich der DE 42 36 045 A1. Zwischen einem ein Außengewinde aufweisenden Gewindestopfen 12 und einem einen Ventilsitz tragenden Ventilkörper 13 ist mittels einer umlaufenden Verstemmung 14 eine Membran 15 eingespannt. Diese Membran 15 wird von Atmosphärenseite her von einem Kolben 16 beaufschlagt, welcher der Kraft einer Druckfeder 17 ausgesetzt ist, welche sich rückwärtig an einer Stufe des Gewindestopfens 12 abstützt. Um die Membran 15 vor einer Überdehnung zu schützen, ist der Hub des Kolbens 16 in Richtung auf die Membran 15 hin durch eine Ringscheibe 18 begrenzt, die außerhalb des Gewindekörpers 12 in einen mit dem Kolben 16 verbundenen Stift 19 eingreift.

Die Membran 15 begrenzt mit ihrer dem Kolben 16 abgewandten Oberfläche eine Auslaßkammer 20, die über einen Ventildurchgang 21 mit der Einlaßkammer 7 verbunden ist. Auf der Seite der Einlaßkammer weist der Ventildurchgang 21 einen Ventilsitz 22 auf, welcher mit einem Schließglied 23 zusammenwirkt. Dieses Schließglied 23 ist mit einem Stößel 24 verbunden, welcher den Ventildurchgang 21 durchragt und an der Membran 15 anliegt. Das Schließglied 23 weist einen metallischen Kopf 25 auf, auf welchen ein elastisches Dichtelement 26 aufgestülpt ist. Das elastische Element 26 wird von einer Druckfeder 27 zum Ventilsitz 22 hin beaufschlagt, wobei die Druckfeder 27 schwächer ausgelegt ist als die ihr entgegenwirkende Druckfeder 17, welche den Kolben 16 beaufschlagt.

Das Schließglied 23 ist von einem Filter 28 umgeben, welcher aus Kunststoff besteht und durch eine umlaufende Verstemmung am Ventilkörper 13 gehalten ist. Im Unterschied zum Stand der Technik weist er einen zusätzlichen Anschlag 29 für das Schließglied 23 auf, welcher verhindert, daß sich das Schließglied 23 zu weit von seinem Ventilsitz 22 entfernt. Der Anschlag 29 ist im wesentlichen zylindrisch und einstückig mit dem Rahmen des Filters 28 gefertigt. Er ragt axial von der Seite des Luftkissens her in den von der Druckfeder 27 aufgespannten Bereich. In den Rahmen des Filters 28 ist ein nicht dargestelltes Gewebe eingelegt, welches Partikel vom Ventildurchgang 21 fernhält, damit die Dichtwirkung zwischen Schließglied 23 und Ventilsitz 22 nicht beeinträchtigt wird.

Eine weitere Maßnahme gegen Verschmutzung ist am Gewindestopfen 12 durchgeführt. Dort, wo der Stift 19 aus dem Gewindestopfen 12 herausragt, ist eine elastische Schutzkappe 30 angebracht, welche von einem topfartigen, mit dem Gewindestopfen 12 verstemmten Schutzdeckel 31 am Gewindestopfen 12 befestigt ist. Die Schutzkappe 30 bietet bei vollem Druckausgleich absolute Dichtheit gegenüber Schmutz und Flüssigkeiten, während der Schutzdeckel 31 vor mechanischer Beschädigung schützt. Damit innerhalb und außerhalb der Schutzkappe 30 Atmosphärendruck herrscht, sind sowohl der Gewindestopfen 12 als auch der Schutzdeckel 31 mit radialen, gegeneinander versetzten Durchbrüchen 32 bzw. 33 versehen.

Die Einlaßkammer 7 besitzt einen gestrichelt angedeuteten Druckmitteleinlaß 34, welcher an die Bremsleitung einer Bremsanlage zwischen Hauptzylinder und Trennventil angeschlossen ist, so daß bei unbetätigtem Bremspedal eine Druckmittelverbindung zu dem an den Hauptzylinder angeschlossenen Vorratsbehälter besteht. Die Auslaßkammer 20 besitzt einen Druckmittelanschluß zur Saugseite einer selbstansaugenden Rückförderpumpe, wobei dieser Druckmittelanschluß hier nicht dargestellt ist.

Sowohl bei einer pedalbetätigten Normalbremsung als auch während einer Antriebsschlupfregelung entspricht die Funktion des dargestellten Ventils dem Stand der Technik und soll hier nicht noch einmal erläutert werden. Wird während einer Antriebsschlupfregelung, also bei geöffnetem Umschaltventil eine pedalbetätigte Bremsung eingeleitet und das Trennventil in der Bremsleitung geöffnet, so können sich die von der Rückförderpumpe erzeugten Druckspitzen in die Einlaßkammer 7 fortpflanzen. Dasselbe passiert, wenn beim Lösen des Bremspedals nach einer Blockierschutzregelung der Hauptzylinderdruck zum Schließen des Umschaltventils nicht mehr ausreicht, während die Rückförderpumpe noch nachläuft.Wenn Trennventil und Umschaltventil gleichzeitig bei laufender Pumpe geöffnet sind, bewirkt das, daß das Umschaltventil während der Ansaugphasen der Rückförderpumpe in Öffnungsrichtung beeinflußt wird, da beim Ansaugen durch die Pumpe die Membran 15 angehoben wird. Während der Druckphasen der Rückförderpumpe hingegen wird das Umschaltventil in Schließrichtung beaufschlagt, da der Förderdruck der Pumpe ebenfalls durch das geöffnete Umschaltventil auf die Membran 15 einwirkt und diese herunterdrückt.

Durch das zwischen der Membran 5 und dem Metalltopf 4 eingeschlossene Luftvolumen werden derartige Druckpulsationen stark gedämpft. Hierdurch wird der Einfluß der Druckpulse der Pumpe auf die Membran 15, welche der eigentlichen Ventilbetätigung dient, stark abgedämpft.

Die gewölbte Form der Membran 5 garantiert auch bei einem Aufquellen des Materials eine hohe Formstabilität, da bei einer Vergrößerung der Membran 5 durch Aufquellen diese in die Einlaßkammer 7 "hineinwächst". Die Vormontage des Luftkissens ermöglichst eine parallele Fertigung des Luftkissens und der eigentlichen Ventileinheit. Hierdurch verkürzt sich die Taktzeit bei der Montage.

Durch die einfache Verstemmung ergeben sich auch keinerlei Verschmutzungsprobleme durch abgehobene Partikel. Trotz des großen eingeschlossenen Luftvolumens benötigt das vorgefertigte Luftkissen einen denkbar geringen Bauraum, so daß der dieses Umschaltventil aufnehmende Ventilblock nicht vergrößert werden muß.

## Patentansprüche

1. Hydraulisch betätigtes Umschaltventil für eine hydraulische Kraftfahrzeugbremsanlage, mit einer Einlaßkammer (7), in welcher ein Schließglied (23) angeordnet ist, welches an einem Stößel (24) befestigt ist, der durch einen Ventilsitz (22) hindurch in eine Auslaßkammer (20) ragt und dort an dem der Einlaßkammer (7) abgewandten Ende der Auslaßkammer (20) an einer ersten Membran (15) anliegt, die die Auslaßkammer (20) von einer luftgefüllten Kammer trennt, welche mit der Atmosphäre in Verbindung steht und von welcher her die erste Membran (15) von einem Kolben (3) beaufschlagt wird, der von einer ersten Druckfeder (17) zur ersten Membran (15) hin belastet ist, dadurch **gekennzeichnet**, daß die Einlaßkammer (7) an ihrem der Auslaßkammer (20) abgewandten Ende durch eine zweite Membran (5) von einem abgeschlossenen Luftkissen getrennt ist.

2. Hydraulisch betätigtes Umschaltventil nach Anspruch 1, dadurch **gekennzeichnet**, daß die zweite Membran (5) in entspanntem Zustand zur Einlaßkammer (7) hin gewölbt ist.

3. Umschaltventil nach Anspruch 1 oder 2, dadurch **gekennzeichnet**, daß die zweite Membran (5) an ihrer dem Luftkissen zugewandten Seite mittig eine Verdickung (10) trägt, die bei hohem Druck in der Einlaßkammer (7) an der rückwärtigen Begrenzungswand (9) des Luftkissens anschlägt.

4. Umschaltventil nach einem der Ansprüche 1 bis 3, dadurch **gekennzeichnet**, daß die zweite Membran (5) vor ihrem Einbau in einen Metalltopf (4) eingelegt wird, in welchem sie mit ihrem Umfang von einer metallischen Ringscheibe (6) gehalten wird, indem der Metalltopf (4) an seinem Umfang mehrfach am Rand mit der Ringscheibe verstemmt wird.

5. Umschaltventil nach Anspruch 4, dadurch **gekennzeichnet**, daß der Metalltopf (4) an seiner Außenwand mehrere Auswölbungen (11) trägt, welche beim Einbau des Metalltopfes (4) gegen die Außenwand der Einlaßkammer (7) drücken.

## Claims

1. Hydraulically operated change-over valve for a hydraulic automotive vehicle brake system, including an inlet chamber (7) housing a closure member (23) that is attached to a tappet (24) which projects through a valve seat (22) into an outlet chamber (20) and abuts therein on a first diaphragm (15) at the end of the outlet chamber (20) remote from the inlet chamber (7), the diaphragm isolating the outlet chamber (20) from an air-filled chamber which is connected to the atmosphere and from the direction of which the first diaphragm (15) is acted upon by a piston (3) that is loaded by a first compression spring (17) towards the first diaphragm (15),
**characterized** in that the inlet chamber (7) on its end remote from the outlet chamber (20) is isolated from an enclosed air cushion by a second diaphragm (5).

2. Hydraulically operated change-over valve as claimed in claim 1,
**characterized** in that the second diaphragm (5) in its untensioned condition is curved towards the inlet chamber (7).

3. Change-over valve as claimed in claim 1 or claim 2,
**characterized** in that the second diaphragm (5) has an enlargement (10) in its middle on the side close to the air cushion which abuts the rearward boundary wall (9) of the air cushion when high pressure prevails in the inlet chamber (7).

4. Change-over valve as claimed in any one of claims 1 to 3,
**characterized** in that the second diaphragm (5), prior to its installation, is inserted into a metal bowl (4), where it is retained on its periphery by a metal annular disc (6) because the metal bowl (4) on its peripheral edge is calked with the metal bowl several times.

5. Change-over valve as claimed in claim 4,
**characterized** in that the metal bowl (4) on its outside wall includes a plurality of bulges (11) which are urged against the outside wall of the inlet chamber (7) when the metal bowl (4) is mounted.

## Revendications

1. Soupape d'inversion à commande hydraulique pour un système hydraulique de freinage automobile, comprenant une chambre d'admission (7), dans laquelle est disposé un élément obturateur (23) fixé sur un poussoir (24) s'étendant à travers un siège de soupape (22) jusque dans une chambre de sortie (20), où il s'appuie sur une première membrane (15), au niveau de l'extrémité de la chambre de sortie (20) qui est située à l'opposé de la chambre d'admission (7), la membrane séparant la chambre de sortie (20) d'une chambre remplie d'air qui communique avec l'atmosphère, et depuis laquelle la première membrane (15) est soumise à l'action d'un piston (3) qui est sollicité en direction de la première membrane (15) par un premier ressort de pression (17), caractérisée en ce qu'au niveau de son extrémité située à l'opposé de la chambre de sortie (20), la chambre d'admission (7) est séparée d'un coussin d'air fermé par une seconde membrane (5).

2. Soupape d'inversion à commande hydraulique selon la revendication 1, caractérisée en ce qu'à l'état détendu, la seconde membrane (5) est bombée en direction de la chambre d'admission (7).

3. Soupape d'inversion à commande hydraulique selon la revendication 1 ou 2, caractérisée en ce que la seconde membrane (5) comporte, du côté tourné vers le coussin d'air, un renflement central (10) qui, en présence d'une pression haute régnant dans la chambre d'admission (7), vient en butée sur la paroi (9) délimitant l'arrière du coussin d'air.

4. Soupape d'inversion selon l'une des revendications 1 à 3, caractérisée en ce qu'avant son montage, la seconde membrane (5) est disposée dans un vase métallique (4), dans lequel sa périphérie est maintenue par une rondelle annulaire métallique (6) en sertissant la rondelle annulaire à plusieurs endroits dans la périphérie du bord du vase métallique (4).

5. Soupape d'inversion selon la revendication 4, caractérisée en ce que la paroi extérieure du vase métallique (4) comporte plusieurs bossages (11) qui, lors du montage du vase métallique (4), se serrent contre la paroi extérieure de la chambre d'admission (7).
